# FASCICULE DE BREVET EUROPEEN

(11) **EP 0 697 074 B1**
(45) Date de publication et mention de la délivrance du brevet: **19.05.1999**
(21) Numéro de dépôt: 95911360.6
(22) Date de dépôt: 01.03.1995
(51) Int. Cl.: F16F 15/123, F16H 45/02

(54) **DISPOSITIF AMORTISSEUR DE TORSION, NOTAMMENT POUR VEHICULES AUTOMOBILES**
DREHSCHWINGUNGSDÄMPFER, INSBESONDERE FÜR KRAFTFAHRZEUGE
TORSIONAL DAMPING DEVICE FOR MOTOR VEHICLES

(30) Priorité: 04.03.1994 FR 9402542
(43) Date de publication de la demande: 21.02.1996
(73) Titulaire: VALEO, 75017 Paris (FR)
(72) Inventeur: ANNIC, Pascal, F-35800 Dinard (FR); GINALDI, Michel, F-75015 Paris (FR); CHASSEGUET, Gustave, F-95150 Taverny (FR)
(74) Mandataire: Gamonal, Didier
(86) Numéro de dépôt international: FR9500239
(87) Numéro de publication internationale: WO9523929

(56) Documents cités:
- FR-A- 2 518 202
- FR-A- 2 620 187
- FR-A- 2 692 642
- US-A- 1 445 716
- US-A- 4 139 995

## Description

La présente invention concerne les dispositifs amortisseurs de torsion, notamment pour véhicules automobiles, du genre comportant une partie d'entrée et une partie de sortie accouplées élastiquement par l'intermédiaire de deux rondelles de phasage montées libres chacune sur l'une des parties.

Un tel amortisseur est décrit par exemple dans le document US-A-4,139,995, et comporte donc deux parties coaxiales montées mobiles angulairement l'une par rapport à l'autre à l'encontre de moyens élastique à action circonférentielle comprenant des organes élastiques intervenant entre des pattes radiales décalées circonférentiellement appartenant aux deux rondelles de phasage.

Dans ce document, la partie d'entrée est constituée par un boîtier en deux parties et la partie de sortie par un moyeu cannelé intérieurement et les rondelles de phasage sont montées rotatives par rapport aux deux parties coaxiales.

Plus précisément, les rondelles de phasage sont montées tourillonnantes sur le moyeu et présentent chacune des bras radiaux pour appui d'organes élastiques à action circonférentielle.

Ces rondelles sont décalées circonférentiellement en sorte que trois jeux de ressorts sont montés en série entre deux appuis consécutifs portés par le boîtier.

L'un des jeux de ressorts prend appui sur l'appui du boîtier et sur une patte de l'une des rondelles de phasage, tandis qu'un autre des jeux de ressorts est interposé circonférentiellement entre la patte de phasage précitée et une patte de la seconde rondelle de phasage. Enfin le troisième jeu de ressorts est monté entre l'appui du boîtier et la patte de la seconde rondelle de phasage.

En pratique ces rondelles de phasage ont une forme tortueuse car elles sont montées de part et d'autre d'un voile d'un seul tenant avec le moyeu.

Ainsi la périphérie interne d'une rondelle de phasage est décalée axialement par rapport à sa périphérie externe. La présente invention a pour objet de pallier cet inconvénient et donc de créer un dispositif amortisseur de torsion à rondelles de phasage simplifiée.

Suivant l'invention un amortisseur de torsion du type sus-indiqué est caractérisé en ce que les deux rondelles de phasage sont montées dans un même plan tête-bêche de manière concentrique, l'une des rondelles, dite rondelle externe, entourant l'autre rondelle, dite rondelle interne, en ce que les pattes de la rondelle interne sont dirigées en direction opposée à l'axe de l'ensemble, tandis que les pattes de la rondelle externe sont dirigées vers l'axe de l'ensemble, et en ce que la rondelle interne est montée tourillonnante sur une première desdites parties coaxiales du dispositif amortisseur de torsion, tandis que la rondelle externe est montée tourillonnante sur ladite première ou ladite seconde des parties coaxiales du dispositif amortisseur de torsion.

Grâce à l'invention les rondelles de phasage peuvent avoir une forme simple. Ces rondelles de phasage peuvent être fabriquées par découpage à la presse, la matière de la rondelle interne de phasage étant prélevée dans la chute de matière de la rondelle externe de phasage.

Dans une forme de réalisation la rondelle externe de phasage est montée tourillonnante sur les pattes de la rondelle interne de phasage. Dans une autre forme de réalisation la rondelle externe de phasage est montée tourillonnante sur des pattes appartenant à la deuxième desdites parties coaxiales, la rondelle interne de phasage étant montée tourillonnante sur ladite première des parties coaxiales.

Dans une forme de réalisation, la seconde des parties du dispositif amortisseur de torsion comporte des pattes pour appui des organes élastiques concernés, lesdites pattes étant échancrées pour passage de doigts appartenant à la première des parties coaxiales du dispositif amortisseur de torsion.

Ces doigts sont propres à agir chacun sur une coupelle interposée entre l'extrémité circonférentielle du ou des ressorts concernés et la patte associée à la deuxième partie coaxiale du dispositif amortisseur de torsion concerné.

Grâce à cette disposition on peut obtenir un amortisseur de torsion à grand débattement angulaire.

Ce dispositif amortisseur de torsion peut appartenir à un disque de friction comme mentionné dans le document US-A-4,139,995. En variante, ce dispositif amortisseur de torsion peut appartenir à un embrayage de verrouillage monté entre la roue de turbine et le carter d'un appareil d'accouplement hydrocinétique.

La description qui va suivre illustre l'invention en regard des dessins annexés dans lesquels :
- la figure 1 est une vue en coupe axiale de l'appareil d'accouplement hydrocinétique sans l'embrayage de verrouillage dans la partie haute de cette figure et avec uniquement le piston de l'embrayage de verrouillage dans la partie basse de cette figure ;
- la figure 2 est une vue en coupe axiale selon la ligne 2-2 de la figure 3 de l'appareil hydrocinétique avec son embrayage de verrouillage ;
- la figure 3 est une vue en coupe selon la ligne 3-3 de la figure 2 ;
- la figure 4 est une vue à échelle agrandie de la partie basse de la figure 2 ;
- la figure 5 est une vue analogue à la figure 4 pour une variante de réalisation ;
- la figure 6 est une vue partielle à plus grande échelle d'une partie de la figure 3 ;
- la figure 7 est une demi-vue en coupe axiale analogue à la figure 2 pour un autre exemple de réalisation.

Tel qu'illustré par les figures, l'embrayage de verrouillage 10 mettant en oeuvre un dispositif amortisseur de torsion 4 est destiné à l'équipement d'un appareil d'accouplement hydrocinétique 11, comportant un convertisseur de couple ou un coupleur, qui est lui-même destiné à l'équipement d'un véhicule automobile.

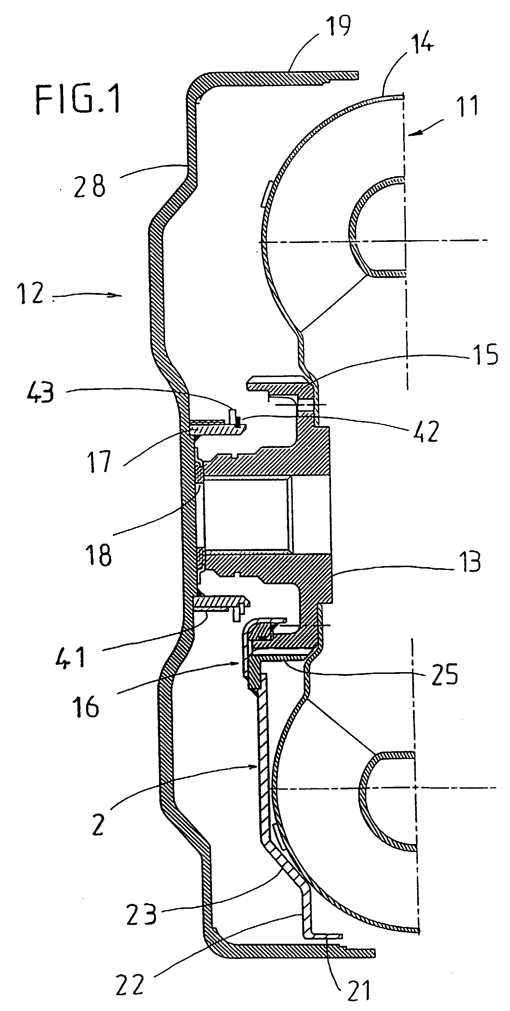

Un tel appareil est décrit dans le brevet US-A-4,976,656, auquel on pourra se reporter, et c'est la raison pour laquelle, par simplicité, seule la première partie du carter 12 et la roue de turbine 14 ont été représentées à la figure 1, la roue d'impulseur et la roue de réacteur n'étant pas visibles.

Pour mémoire on rappellera que cet appareil 11 comporte, dans un carter 12 étanche propre à être lié en rotation au vilebrequin du moteur à combustion interne, au moins une roue d'impulseur solidaire de l'autre partie du carter, en forme de demi-coquille, et une roue de turbine 14, qui est propre à être liée en rotation à l'arbre d'entrée de la boîte de vitesses. Ici l'appareil 11 comporte pour formation d'un convertisseur de couple également une roue de réacteur portée par un manchon fixe entourant ledit arbre d'entrée avec interposition d'une roue libre.

L'embrayage de verrouillage 10 intervient, de manière connue en soi, axialement entre la roue de turbine 14 et le carter 12, de forme annulaire, à la périphérie externe de celui-ci.

Il comporte un piston 2 propre à venir en contact avec un contre-piston 3 pour établir une liaison directe entre la roue de turbine 14 et le carter 12.

De manière connue en soi, la roue de turbine et la roue d'impulseur comportent des aubes en sorte que la roue de turbine 14 est entraînée en rotation par la roue d'impulseur solidaire du carter 12 grâce à la circulation de l'huile contenue dans le carter 12.

L'embrayage de verrouillage 10 intervient de manière connue en soi après le démarrage du véhicule automobile pour éviter les phénomènes de glissement et les pertes d'énergie.

La roue de turbine 14 est solidaire, ici par soudage en variante par rivetage, d'un moyeu de turbine 13 cannelé intérieurement pour liaison en rotation avec l'arbre d'entrée précité de la boite de vitesses.

Ce moyeu 13, ici métallique, présente à sa périphérie externe une couronne 15 d'orientation axiale cannelée extérieurement.

Le piston 2 est solidaire ici par soudage en variante par rivetage d'une douille 25 cannelée intérieurement pour venir en prise de manière complémentaire avec les cannelures de la couronne 15.

Ainsi le carter 12 forme l'élément menant et le moyeu 13 l'élément mené de l'appareil d'accouplement hydrocinétique 11.

Le carter 12 est donc propre à être calé en rotation sur un arbre menant (l'arbre moteur du véhicule), tandis que la roue de turbine 14 est propre à être calée en rotation sur un arbre mené (l'arbre d'entrée de la boîte de vitesses).

Le carter 12 forme également l'élément d'entrée de l'embrayage de verrouillage 10 et de l'amortisseur de torsion 4, tandis que le piston 2 forme l'élément de sortie de l'embrayage de verrouillage 10 en étant propre à être attelé au moyeu 13.

Le piston 2, globalement d'orientation transversale, est ainsi de manière précitée lié en rotation à la roue de turbine 14 (ici via le moyeu 13), tout en étant monté mobile axialement vis-à-vis de la roue de turbine 14.

Un dispositif d'étanchéité 16 intervient entre la face avant de la douille 25 et l'alésage interne de la couronne 15. Ce dispositif comporte une pièce annulaire à section en forme de L soudée, d'une part, sur le flasque transversal, que comporte la douille 25 à son extrémité axiale la plus éloignée de la roue 14 pour fixation par soudage du piston 2, et, d'autre part, sur une bague interposée entre la périphérie interne de la couronne 15 et la périphérie externe de la partie axiale tubulaire de la pièce annulaire précitée. Un joint d'étanchéité est prévu entre ladite bague et la couronne 15.

Par ailleurs le carter 12 porte centralement un nez 17 de forme tubulaire formant bague de centrage. Ce nez 17, d'orientation axiale, est dirigé vers la roue de turbine 14. Il est rapporté à fixation sur le carter 12 ici par soudage, par exemple par soudage du type laser, avec formation d'un cordon.

Plus précisément le nez 17 est rapporté centralement sur la paroi 28, globalement transversale, que présente frontalement le carter 12.

Le nez 17 entoure l'extrémité avant du moyeu 13 ainsi qu'une bague de poussée 18 interposée axialement entre l'extrémité libre du moyeu 13 et le carter. Cette bague 18, ici en matériau de frottement, présente, de manière connue en soi, des canaux transversaux (non visibles) pour établir une communication entre l'intérieur et l'extérieur du moyeu 13.

Pour mémoire on rappellera que l'arbre d'entrée de la boîte de vitesses est creusé intérieurement en sorte que le fluide, ici de l'huile, peut circuler à travers la bague 18 pour manoeuvre du piston 2.

Cette bague 18 comporte un insert de retenu fixé sur le carter ici par soudage par point.

Suivant une caractéristique le piston 2 est interposé axialement entre la roue de turbine 14 et une masse 3 montée tourillonnante sur le nez 17.

La masse 3 porte à sa périphérie externe une saillie annulaire 31 d'orientation transversale offrant une surface de contact 32 au piston 2 en regard d'une contre-surface 22 d'orientation transversale du piston 2.

Ici, lorsque l'embrayage 10 est engagé, le piston 2 s'appuie indirectement par sa contre-surface 22 sur la surface 32, une garniture de frottement 40 étant interposée axialement entre la surface 32 et le piston 2. Cette garniture 40 est ici collée sur la surface 32, mais l'inverse est possible, la garniture 40 pouvant être collée sur le piston 2 doté à sa périphérie externe d'un rebord annulaire 21 d'orientation axiale pour sa rigidification.

C'est entre la périphérie interne du rebord annulaire 19 d'orientation axiale, que présente le carter 12 à sa périphérie externe, et la périphérie externe de la roue de turbine 14 qu'est implantée la surface 32. Pour ce faire, la saillie 31 est raccordée par une partie inclinée 33 à la partie principale de la masse 3 formant selon une caractéristique de l'invention le contre-piston de l'embrayage 10.

De même une partie inclinée raccorde la contre-surface 22 du piston 2, ici en tôle emboutie, à la partie principale d'orientation transversale de celui-ci.

Ainsi la surface 32 et la contre-surface 22 sont décalées axialement en direction de la roue de turbine 14 ici à la faveur des parties inclinées 23,33 permettant d'épouser au mieux la forme de la roue 14 et donc de réduire l'encombrement axial.

Suivant une caractéristique la partie inclinée 33 offre une surface d'appui à une rondelle de phasage 5 à section globalement de forme trapézoïdale.

Plus précisément c'est la face 34 tournée à l'opposé du piston 2 et de la roue 14 de la partie inclinée 33, de forme tronconique, qui forme ladite surface d'appui. Cette face 34 se raccorde à la face annulaire d'orientation axiale 35, que présente la partie principale de la masse 3 à sa périphérie externe.

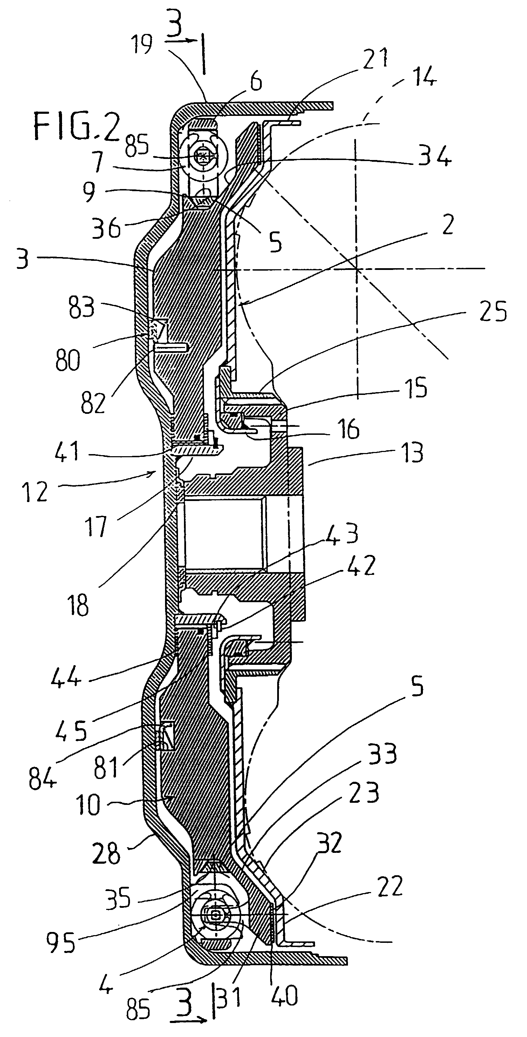

Suivant une caractéristique la masse 3 présente de place en place des saillies radiales 9. Ici trois saillies 9 sont prévues. Ces saillies 9 ont en section transversale (figure 2) une forme de coin et offrent une face d'appui inclinée 36 en regard de la face 34. La face 36 est inclinée en sens inverse par rapport à la face 34.

Suivant une caractéristique les saillies 36 s'étendent au niveau de l'extrémité libre de la face 35 en sorte qu'il est formé localement une gorge de forme trapézoïdale avec deux faces inclinées 36,34 et un fond 35.

L'écartement entre les faces inclinées 34,36 est déterminé par la largeur de la rondelle de phasage 5 afin que celle-ci puisse se loger dans la gorge fractionnée et venir en appui, à jeu de montage, sur les faces 36,34. Un jeu radial annulaire existe entre la face 35 et la rondelle 5.

Ainsi la rondelle 5, dite par commodité rondelle interne de phasage, est calée axialement et radialement par les faces 36,34 et la masse 3 forme ainsi une poulie pour la rondelle 5.

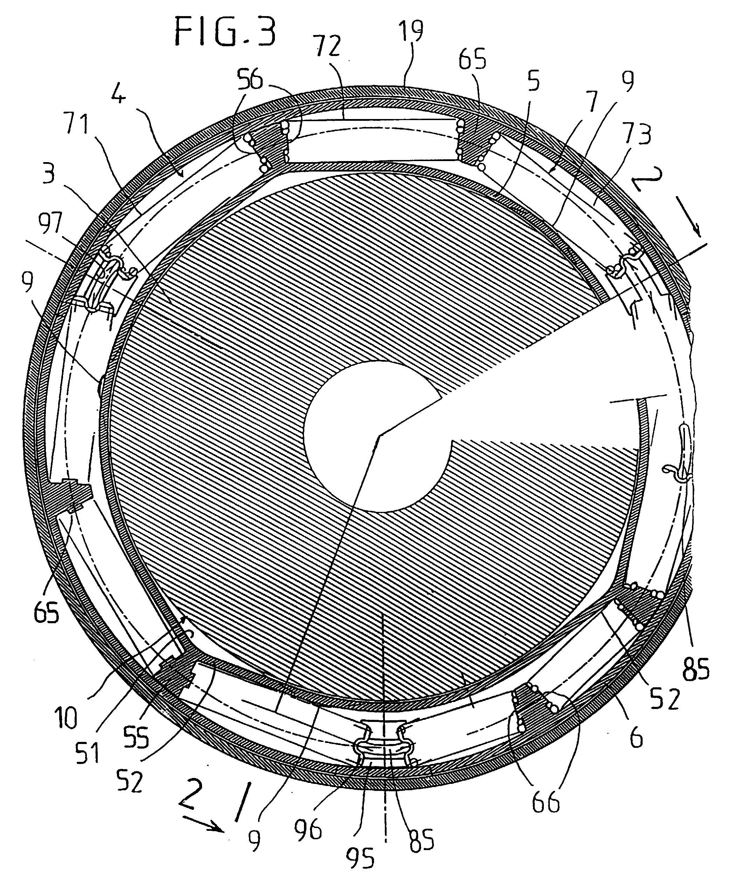

Pour pouvoir monter la rondelle 5 dans les gorges de la masse 3, suivant une caractéristique, ladite rondelle 5 présente localement des passages 51 dans lesquels sont propres à pénétrer les saillies 9. Circonférentiellement ces saillies 9 ont ici une forme globalement triangulaire (figure 3) et il en est de même des passages 51 formés donc à la faveur d'une déformation saillante 52 en direction opposée à l'axe de l'ensemble, ladite déformation 52 étant de forme triangulaire.

Ainsi le montage de la rondelle 5 dans les gorges est du type baïonnette avec dans un premier temps engagement axial des déformations 52 par dessus les saillies 9 puis rotation avec engagement de la rondelle 5 dans les gorges et calage axial de celle-ci.

La masse 3 est accouplée élastiquement au carter 12 ici par le dispositif amortisseur de torsion 4 intervenant à la périphérie externe de la masse 3. Plus précisément ce dispositif intervient, d'une part, radialement entre la périphérie interne du rebord externe 19 du carter 12 et la face 35, et, d'autre part, axialement entre la partie transversale 28 du carter 12, ici en tôle emboutie, et la saillie 31 de la masse 3 ici en acier ou en variante en fonte.

Ce dispositif comporte selon l'invention, une autre rondelle de phasage 6, dite rondelle de phasage externe, montée ici tourillonmante sur la périphérie externe de la première rondelle de phasage 5.

Ici ces rondelles 5,6 sont métalliques en étant réalisées par découpage à la presse. Ces rondelles de phasage 5,6 sont montées tête-bêche de manière concentrique, la matière de la rondelle interne 5 étant prélevée économiquement dans la chute de matière de la rondelle externe 6 entourant la rondelle 5.

Les rondelles de phasage 5,6 sont ainsi montées dans le même plan

Ces rondelles 5,6 sont à l'image l'une de l'autre et présentent chacune des pattes radiales respectivement 55,65, avec chacune des doigts respectivement 56,66 s'étendant circonférentiellement de part et d'autre des pattes 55,65 pour centrage de moyens élastiques à action circonférentielle 7 décrits ci-après.

Les pattes 55 de la rondelle 5 sont dirigées radialement en direction opposée à l'axe de l'ensemble, tandis que les pattes 65 de la rondelle 6 sont dirigées vers l'axe de l'ensemble.

Ces pattes 55,65 ont une forme globalement trapézoïdale, l'extrémité libre des pattes 65 s'étendant à distance de la rondelle 5, tandis que le bord supérieur, de plus grande largeur circonférentielle, des pattes 55 sert suivant une caractéristique au centrage de la rondelle externe 6.

Cette rondelle 6 est ainsi, suivant une caractéristique, montée tourillonnante sur la périphérie externe des pattes 55.

Bien entendu la hauteur des pattes 65 est telle que celle-ci n'interfère pas avec les déformations 52 et le nombre de pattes 55,65 dépend des applications.

Ici trois pattes 55,65 sont prévues. Les pattes 55 sont réparties régulièrement à 120° les unes par rapport aux autres et s'étendent à partir du sommet des déformations 52.

Les pattes 65 sont également réparties régulièrement à 120° les unes par rapport aux autres.

Le carter 12 porte de place en place des pattes d'appui 95, tandis que la masse 3 porte des doigts 85, circonférentiellement de forme oblongue.

Trois pattes 95 réparties régulièrement à 120° les unes par rapport aux autres et trois doigts 85 également répartis à 120° les uns par rapport aux autres sont prévus.

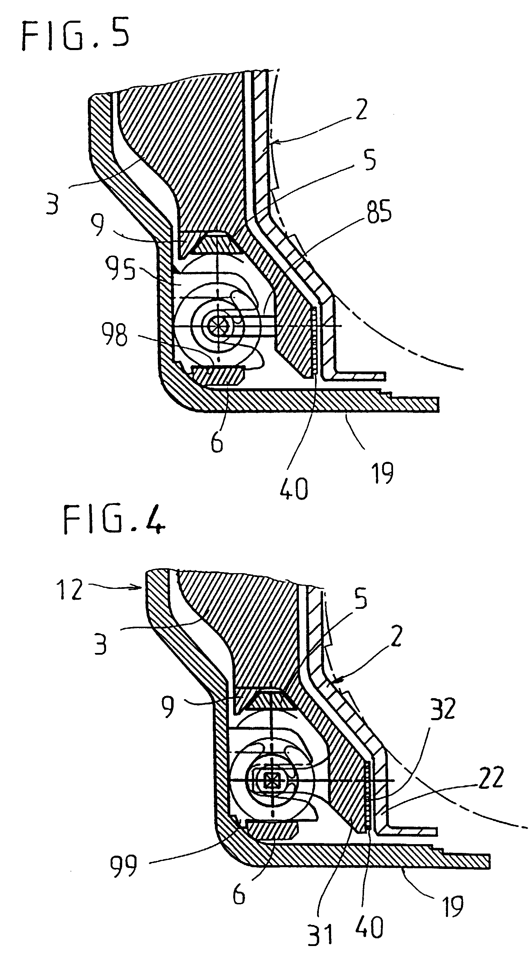

Les doigts 85 venus d'un seul tenant par moulage avec la masse 3 s'étendent axialement et il en est de même des pattes 95 rapportées par soudage sur le carter 12 (sur la paroi transversale 28 de celui-ci). Ces pattes 95 offrent transversalement une grande surface d'appui (figures 4 et 5).

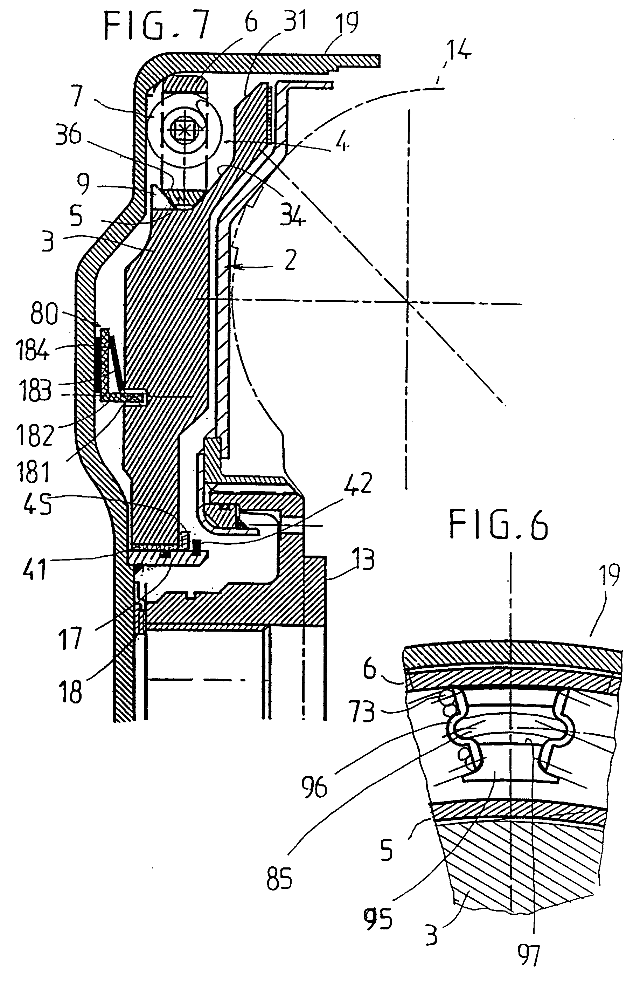

A l'état de repos du dispositif amortisseur de torsion les doigts 85 pénètrent dans une échancrure circonférentielle 97 (figures 4 et 6), que présentent les pattes d'appui 95.

Comme visible à la figure 3 à l'état de repos de l'amortisseur de torsion entre deux pattes 95 consécutives on trouve successivement une patte 65 puis une patte 55, le décalage circonférentiel entre deux pattes consécutives 55,65,95 étant globalement de 40°.

Dans cette position, les saillies 9 sont dans une position médiane par rapport aux pattes 55 en sorte que la rondelle 5 ne peut s'échapper lors du mouvement angulaire relatif entre la masse 3 et la rondelle 5.

Ainsi les pattes 65 de la rondelle externe 6 sont décalées circonférentiellement par rapport aux pattes 55 de la rondelle interne 5, et ici il est prévu trois jeux de deux organes élastiques concentriques 73,72,71 intervenant circonférentiellement entre deux pattes 95 consécutives en étant montées radialement entre les deux rondelles 5,6.

Ces organes élastiques appartiennent aux moyens élastiques 7 à action circonférentielle précités et consistent ici en des ressorts à boudin concentriques de même raideur.

Grâce à la formation des pattes 95 et des doigts 85, il est possible ainsi d'avoir trois groupes de trois jeux d'organes élastiques intervenant en parallèle, les trois jeux d'organes élastiques intervenant en série entre deux pattes d'appui consécutives 95.

Suivant une autre caractéristique, le dernier d'organes élastiques 73 prend appui sur une coupelle d'appui 96 ici métallique (figure 6).

Cette coupelle 96 est bombée centralement, ici de manière semi-circulaire, pour coopération avec l'une des extrémités circonférentielles des doigts 85, ladite extrémité étant arrondie à cet effet pour pénétrer dans la partie bombée de la coupelle 96.

Dans la position de repos de l'amortisseur 4, les doigts 85 prennent appui sur les coupelles 96 (figure 6).

Bien entendu un jeu circonférentiel peut exister car pour la position de repos précitée les coupelles 96 sont en appui sur les bords latéraux des pattes 95 (figure 6).

Les doigts 85, de forme arquée (figure 6), sont montés de manière télescopique à l'intérieur des pattes 95 grâce à l'évidement de passages 97 de celles-ci.

Ainsi les rondelles de phasage 5,6 sont montées rotatives par rapport aux deux parties coaxiales 12,3 et lors d'un mouvement relatif entre la masse 3 et le carter 12 les doigts 85 sont admis à agir sur les coupelles 96 concernées et à comprimer les organes élastiques 73, lesquels s'appuient sur les pattes 65 qui se déplacent alors entraînant une compression des organes 72 prenant appui sur les pattes 55 qui se déplacent pour comprimer les ressorts 71 prenant appui sur les pattes 95.

Grâce à cette disposition, il est possible d'obtenir de grands débattements angulaires entre les doigts 85 et les pattes 95. Ici tous les organes 71,72,73 ont la même raideur mais il n'en est pas nécessairement ainsi par exemple les organes 72 peuvent avoir une plus forte raideur que les organes 73, lesquels peuvent avoir une plus forte raideur que les organes 71, choisis par exemple pour filtrer les vibrations dans le domaine de ralenti du moteur du véhicule.

Il est possible d'obtenir ainsi un dispositif amortisseur de torsion à pentes multiples et à raideur variable.

Bien entendu cela dépend des applications et notamment du couple à transmettre.

On notera que la périphérie interne des pattes 95 est profilée pour retenir les coupelles 96 (figure 6). Ainsi le bord interne des pattes 95 est élargi.

On notera également (figure 5) que la rondelle externe 6 est calée axialement à la faveur d'une échancrure rectangulaire 98, que présentent les pattes soudées 95 à leur périphérie externe 80.

A la figure 4 la rondelle 6 est calée axialement dans un seul sens à la faveur d'un épaulement 99.

Dans certain cas, les moyens élastiques 7 effectuent à eux seuls un tel calage du fait que les pattes 65 viennent en prise par leurs doigts 66 avec les ressorts 72,73, eux-mêmes en prise avec les pattes 95 et 55.

Dans la figure 2 la masse 3 est montée tourillonnante sur le nez tubulaire 17 solidaire du carter 12 par l'intermédiaire d'un palier lisse 41.

On notera qu'un joint d'étanchéité est prévu entre la périphérie interne de la masse 3 et la périphérie externe du palier 41 fixé ici sur le nez 17.

Une rondelle de frottement 44 est interposée axialement entre la paroi 28 du carter 12 et la masse 3, tandis qu'une rondelle de frottement 45 intervient sur l'autre face de la masse 3.

Cette rondelle est maintenue par une rondelle d'application 43 calée axialement par un circlips 42 monté dans une gorge, que présente le nez 17 à son extrémité libre.

Suivant une autre caractéristique un dispositif d'hystérésis variable 80 intervient entre la paroi frontale 28 du carter 12 et la masse 3.

Ce dispositif comporte une rondelle élastique 83 à action axiale du type rondelle Belleville (en variante une rondelle ondulée) et une rondelle d'application 84 portant sur sa face dirigée vers la paroi 28 une garniture de frottement fixée ici par collage sur la rondelle 84.

Bien entendu la rondelle de frottement peut être collée contre la paroi 28.

Les rondelles 83,84 sont montées dans une creusure 81 que présente la masse 3 à cet effet.

Comme visible à la figure 2, la rondelle 83 prend appui entre le fond de la creusure 81 pour action sur la rondelle 84 et solliciter ladite rondelle 84 en direction de la face 28 afin de serrer la garniture de frottement de la rondelle 84 au contact de la paroi 28.

Ainsi la masse 3 est montée tourillonnante à sa périphérie interne sur le carter 12 à la faveur d'un palier annulaire 41,43,44 globalement en forme de U.

Le piston 2 délimite, de manière connue en soi, deux chambres. Au démarrage du véhicule, le piston 2 est à distance de la face 32 et de la masse 3. Une pression hydraulique est alors établie dans la chambre délimitée par le piston 2, la masse 3 et le moyeu 13.

L'alimentation de cette chambre est alors effectuée à partir des canaux transversaux de la bague 18.

L'embrayage de verrouillage 10 est alors désengagé et la roue d'impulseur peut alors entraîner la roue de turbine 14 et le moyeu 13 grâce à la circulation du fluide contenu dans le carter 12.

Pour éviter les phénomènes de glissement et les pertes d'énergie, une fois que la roue de turbine 14 est entraînée, on inverse les pressions hydrauliques dans les deux chambres de commande délimitées par le piston 2.

Le piston 2 est alors admis à se rapprocher de la garniture 40, puis à venir serrer ladite garniture 40.

Lors de cette phase, on vient décharger la rondelle élastique du dispositif d'hystérésis 80.

On notera qu'ici la rondelle d'application 84 est calée en rotation grâce à une goupille 82 implantée au niveau de la creusure 81.

Bien entendu un jeu circonférentiel peut être prévu, la rondelle 84 intervenant de manière différée.

A cet effet, la rondelle 84 porte à sa périphérie interne au moins une patte d'orientation axiale propre à venir en prise avec la goupille 82.

Bien entendu, en variante, (figure 7) la masse 3 peut présenter au moins une échancrure 181 en forme de mortaise pour pénétration, éventuellement à jeu circonférentiel, d'une patte 182, en forme de tenon que présente la rondelle d'application 184 à sa périphérie interne.

La rondelle Belleville 183 est alors interposée axialement entre la masse 3 et la rondelle d'application 184 en étant centrée par la patte 182.

On notera que dans cette figure les rondelles 44 et 43 ont été supprimées et que la masse 3 peut se déplacer axialement.

Grâce à toutes ces dispositions, on obtient un embrayage de verrouillage présentant au niveau du moyeu 13 une très faible inertie, principalement celle du piston lorsqu'il est en position désengagée et avec une forte inertie, due en grande partie à la masse 3, lorsqu'il est engagé (garniture 40 serrée entre la surface 32 et la contre-surface 22).

Cette forte inertie permet d'abaisser la fréquence de résonance que présente la chaîne cinématique allant du moteur du véhicule à la boite de vitesses via l'appareil 11.

Cette fréquence de résonance est ainsi très basse. Ainsi lorsque le véhicule roule on se trouve largement au-dessus de cette fréquence de résonance, ce qui est favorable pour le confort de l'usager.

On notera que lorsque l'on engage le piston 2, dans une première phase, les frottements dus à l'hystérésis 80 sont forts puis diminuent au fur et à mesure que l'on serre la garniture 40, éventuellement fractionnée, la pression hydraulique agissant à l'encontre de la force développée par la rondelle élastique 83,183. Lors du désengagement de l'embrayage les forces de frottement augmentent.

Ainsi au démarrage du véhicule lorsque l'on passe par la fréquence de résonance on bénéficie d'un fort frottement entre le carter 12 et la rondelle 84 (la masse 3 se déplaçant alors par rapport au carter 12) pour mieux amortir les vibrations puis ce frottement diminue.

On notera que l'amortisseur de torsion 4 permet également d'atténuer les vibrations, et que le mode de réalisation de la figure 7 est préférable car la masse 3 peut se déplacer axialement.

Bien entendu on peut enlever la rondelle 44 de la figure 2. Dans tous les cas le circlips 42 limite le déplacement axial de la masse 3 pour éviter notamment un léchage de la garniture 40 lorsque l'embrayage 10 est désengagé.

Grâce à cette possibilité de déplacement, en marche normale, (embrayage 10 engagé) on obtient de faibles frottements entre la paroi 28 du carter 12 et la masse 3 car la rondelle 83,183 est délestée. Le dispositif d'hystérésis est ainsi variable.

Ainsi qu'on l'aura compris la partie d'entrée de l'embrayage de verrouillage est en deux parties coaxiales, à savoir, la masse 3 et le carter 12, et l'amortisseur de torsion 4 comporte deux parties coaxiales 12,3 montées mobiles angulairement l'une par rapport à l'autre dans les limites d'un débattement angulaire déterminé.

On obtient ainsi un très grand confort pour l'usager.

Bien entendu la présente invention n'est pas limitée à l'exemple de réalisation décrit. En particulier la masse 3 peut être montée tourillonnante sur le nez 17 à l'aide d'un roulement à billes à une ou plusieurs rangées de billes.

Les ressorts 71,72,73 peuvent ne comporter qu'un seul ressort.

En variante l'appareil d'accouplement hydrocinétique 11 peut comporter un coupleur dépourvu alors de roue de réacteur.

Dans tous les cas le carter 12 constitue ici l'élément menant de l'appareil hydrocinétique et également l'élément d'entrée du dispositif amortisseur de torsion, la masse 3 constituant la partie de sortie dudit amortisseur de torsion.

Le piston 2 constitue l'élément de sortie de l'embrayage de verrouillage calé en rotation avec mobilité axiale sur l'élément mené de l'appareil d'accouplement hydrocinétique.

En variante le piston 2 peut être monté tourillonnant sur le moyeu 13 en étant attelé directement à la roue de turbine 14 par des languettes tangentielles.

Le moyeu 13 est alors dépourvu de cannelure à sa périphérie externe.

On appréciera également que les temps de réponse pour embrayer et débrayer l'embrayage 10 sont très courts du fait de la faible inertie du piston 2 et que les pignons de la boite de vitesses sont ménagés lorsque l'embrayage 10 est déverrouillé du fait de la faible inertie du piston 2.

Bien entendu la rondelle 6 peut être centrée par les pattes 95.

Ainsi qu'on l'aura compris, et qu'il ressort à l'évidence de la description, la rondelle de phasage interne 5 est montée tourillonnante de manière libre par rapport à la masse 3, tandis que la seconde rondelle de phasage est montée tourillonnante de manière libre soit par rapport aux pattes 55 de la rondelle 5 et donc à la masse 3 ou aux pattes 95 appartenant à la deuxième partie de l'amortisseur de torsion, la masse 3 constituant la première partie de l'amortisseur de torsion.

Bien entendu l'amortisseur de torsion peut appartenir à un dispositif amortisseur de torsion comme décrit dans le document US-A-4,139,995.

Dans ce cas, la masse 3 est remplacée par un moyeu cannelé intérieurement pour son calage en rotation par rapport à un arbre mené.

Ce moyeu a alors une forme tubulaire en sorte que la rondelle de phasage interne est montée tourillonnante de manière libre sur la périphérie externe du moyeu.

A la périphérie externe du moyeu on peut former des gorges avec des faces inclinées 34,36 comme décrits précédemment.

La rondelle de phasage externe est alors montée tourillonnante de manière libre soit par rapport aux pattes de la rondelle de phasage interne ou soit par la rondelle d'espacement prévue entre les deux parties du boîtier formant la première partie de l'amortisseur de torsion, ledit boîtier portant un disque de friction dont les garnitures de frottement sont propres à être serrées entre les plateaux de pression et de réaction d'un embrayage.

En variante comme décrit à la figure 12 du document US-A-4,139,995, le boîtier peut être fixé de manière rigide sur le plateau de réaction.

En variante le dispositif amortisseur de torsion peut consister en un double volant amortisseur avec un flasque fixé sur le vilebrequin et la masse 3 montée tourillonnante sur le nez 17 du flasque. La masse 3 forme alors le plateau de réaction d'un embrayage à disque de friction.

Bien entendu, dans tous les cas, des coupelles 96 peuvent être prévues à chaque extrémité circonférentielle des ressorts 71,72,73.

En variante on peut inverser les structures. Ainsi la rondelle interne de phasage 5 peut présenter à sa périphérie interne des pattes dirigées radialement vers l'axe de l'ensemble et la masse 3 les passages.

Par exemple la masse 3 présente une gorge complémentaire creusée dans sa face 33. Cette gorge est interrompue localement (le flanc avant de celle-ci dirigée vers le carter 12) pour passage des pattes internes de la rondelle 5. Ces pattes ont alors avantageusement en section une forme complémentaire à celle de la gorge pour s'engager dans celle-ci.

Ainsi la rondelle 5 peut présenter par exemple trois pattes internes réparties régulièrement circonférentiellement et la masse 3 trois échancrures correspondantes. On engage alors axialement les pattes dans les échancrures puis on effectue une rotation et donc un montage du type baïonnette.

Ainsi la rondelle de centrage 5 comporte de place en place des saillies, tandis que la masse 3 présente localement des passages dans lesquels sont propres à pénétrer les saillies, en sorte que le montage de la rondelle interne sur la masse 3 est du type baïonnette. La gorge étant par exemple de forme trapézoïdale, comme dans les figures précédentes, la première partie coaxiale (la masse 3) présente donc à sa périphérie externe une première face d'appui en regard d'une autre face d'appui échancrée pour le passage des pattes de la rondelle interne, en sorte qu'il est formé une gorge, ici trapézoïdale, pour le logement de la rondelle interne, calée axialement et radialement par ses pattes internes, de section trapézoïdale, complémentaires à celle de la gorge.

Bien entendu la gorge peut être de section rectangulaire tout comme les pattes complémentaires.

## Revendications

1. Dispositif amortisseur de torsion, notamment pour véhicules automobiles, du genre comportant deux parties coaxiales (12,3) montées mobiles angulairement l'une par rapport à l'autre, à l'encontre de moyens élastiques à action circonférentielle (7) comprenant des organes élastiques (71,72,73) intervenant entre des pattes radiales (55,65) décalées circonférentiellement appartenant à deux rondelles de phasage (5,6), montées rotatives par rapport aux deux parties coaxiales (12,3), caractérisé en ce que les deux rondelles de phasage (5,6) sont montées dans un même plan tête-bêche de manière concentrique, l'une des rondelles (6), dite rondelle externe, entourant l'autre rondelle (5), dite rondelle interne, en ce que les pattes (55) de la rondelle interne (5) sont dirigées en direction opposée à l'axe de l'ensemble, tandis que les pattes (65) de la rondelle externe sont dirigées vers l'axe de l'ensemble, et en ce que la rondelle interne (5) est montée tourillonnante sur une première (3) desdites parties coaxiales (3,12) du dispositif amortisseur de torsion, tandis que la rondelle externe (6) est montée tourillonnante sur ladite première ou ladite seconde des parties coaxiales (3,12) du dispositif amortisseur de torsion.

2. Dispositif selon la revendication 1, caractérisé en ce que la rondelle de phasage externe (6) est montée tourillonnante sur les pattes (55) de la rondelle interne (5).

3. Dispositif selon la revendication 1, caractérisé en ce que la rondelle interne (5) est montée tourillonnante sur la première (3) des parties coaxiales du dispositif amortisseur de torsion, tandis que la rondelle externe (6) est montée tourillonnante sur des pattes (95) appartenant à la deuxième partie coaxiale (12) du dispositif amortisseur de torsion.

4. Dispositif selon l'une quelconque des revendications 1 à 3, caractérisé en ce que la deuxième (12) des parties coaxiales du dispositif amortisseur de torsion comporte des pattes (95) pour appui des organes élastiques concernés (73) du dispositif amortisseur de torsion, tandis que la première partie coaxiale (3) du dispositif amortisseur de torsion comporte des doigts (85), et en ce que les pattes (95) de la deuxième partie coaxiale (12) sont échancrées pour passage desdits doigts (85).

5. Dispositif selon la revendication 4, caractérisé en ce que les organes élastiques concernés prennent appui sur les pattes (95) de la deuxième (12) des parties coaxiales du dispositif amortisseur de torsion par l'intermédiaire de coupelles d'appui (96) présentant une partie bombée dans laquelle est propre à pénétrer ledit doigt (85).

6. Dispositif selon l'une quelconque des revendications 1 à 5, caractérisé en ce que ladite première partie coaxiale (3) comporte de place en place des saillies radiales (9), tandis que la rondelle interne (5) présente localement des passages (51) dans lesquels sont propres à pénétrer les saillies (9), en sorte que le montage de la rondelle interne (5) sur la première partie coaxiale (3) du dispositif amortisseur de torsion est du type baïonnette.

7. Dispositif selon la revendication 6, caractérisé en ce que les saillies (9) ont transversalement une forme de coin et offrent une face d'appui inclinée (36) en regard d'une autre face inclinée (34) formée sur ladite première partie (3), en sorte qu'il est formé localement une gorge de forme trapézoïdale pour logement de la rondelle interne (5).

8. Dispositif selon l'une quelconque des revendications 1 à 7, caractérisé en ce qu'il appartient à un embrayage de verrouillage (10) intervenant entre le carter (12) et la roue de turbine (14) d'un appareil d'accouplement hydrocinétique (11).

9. Dispositif selon la revendication 8, caractérisé en ce que la première partie coaxiale (3) du dispositif amortisseur de torsion est une masse (3) montée tourillonnante sur un nez tubulaire (17) solidaire du carter (12), ledit carter constituant la deuxième partie coaxiale (12) du dispositif amortisseur de torsion.

10. Dispositif selon la revendication 9, caractérisé en ce que la masse (3) présente à sa périphérie externe une saillie annulaire (31) d'orientation transversale offrant une surface de contact (32) à un piston (2), que présente l'embrayage de verrouillage.

## Patentansprüche

1. Drehschwingungsdämpfervorrichtung, insbesondere für Kraftfahrzeuge, umfassend zwei koaxiale Teile (12, 3), die im Verhältnis zueinander winklig beweglich entgegen umfangsmäßig wirksamen elastischen Mitteln (7) gelagert sind, die elastische Organe (71, 72, 73) umfassen, die zwischen umfangsmäßig versetzten radialen Ansätzen (55, 65) wirksam sind, die zu zwei im Verhältnis zu den zwei koaxialen Teilen (12, 3) drehbar gelagerten Einstellscheiben (5, 6) gehören, **dadurch gekennzeichnet,** daß die beiden Einstellscheiben (5, 6) in einer gleichen Ebene entgegengesetzt konzentrisch gelagert sind, wobei eine der Scheiben (6), die als äußere Scheibe bezeichnet wird, die andere, als innere Scheibe bezeichnete Scheibe (5) umgibt, daß die Ansätze (55) der inneren Scheibe (5) in Gegenrichtung zur Achse der Einheit gerichtet sind, während die Ansätze (65) der äußeren Scheibe zur Achse der Einheit gerichtet sind, und daß die innere Scheibe (5) drehbar auf einem ersten (3) der besagten koaxialen Teile (3, 12) der Drehschwingungsdämpfervorrichtung gelagert ist, während die äußere Scheibe (6) drehbar auf dem besagten ersten oder dem besagten zweiten der koaxialen Teile (3, 12) der Drehschwingungsdämpfervorrichtung gelagert ist.

2. Vorrichtung nach Anspruch 1, **dadurch gekennzeichnet,** daß die äußere Einstellscheibe (6) drehbar auf den Ansätzen (55) de inneren Scheibe (5) gelagert ist.

3. Vorrichtung nach Anspruch 1, **dadurch gekennzeichnet,** daß die innere Scheibe (5) drehbar auf dem ersten (3) der koaxialen Teile der Drehschwingungsdämpfervorrichtung gelagert ist, während die äußere Scheibe (6) drehbar auf Ansätzen (95) gelagert ist, die zum zweiten koaxialen Teil (12) der Drehschwingungsdämpfervorrichtung gehören.

4. Vorrichtung nach einem der Ansprüche 1 bis 3, **dadurch gekennzeichnet,** daß der zweite (12) der koaxialen Teile der Drehschwingungsdämpfervorrichtung Ansätze (95) für die Auflage der betreffenden elastischen Organe (7) der Drehschwingungsdämpfervorrichtung umfaßt, während der erste koaxiale Teil (3) der Drehschwingungsdämpfervorrichtung Finger (85) umfaßt, und daß die Ansätze (95) des zweiten koaxialen Teils (12) mit Aussparungen für den Durchgang der besagten Finger (85) versehen sind.

5. Vorrichtung nach Anspruch 4, **dadurch gekennzeichnet**, daß die betreffenden elastischen Organe auf den Ansätzen (95) des zweiten (12) der koaxialen Teile der Drehschwingungsdämpfervorrichtung über Auflageteller (96) zur Auflage kommen, die einen gewölbten Teil aufweisen, in den der besagte Finger (85) eingreifen kann.

6. Vorrichtung nach einem der Ansprüche 1 bis 5, **dadurch gekennzeichnet,** daß der besagte erste koaxiale Teil (3) stellenweise radiale Vorsprünge (9) umfaßt, während die innere Scheibe (5) örtlich Durchgänge (51) aufweist, in die die Vorsprünge (9) eingreifen können, so daß die Anbringung der inneren Scheibe (5) auf dem ersten koaxialen Teil (3) der Drehschwingungsdämpfervorrichtung nach dem Bajonettprinzip erfolgt.

7. Vorrichtung nach Anspruch 6, **dadurch gekennzeichnet,** daß die Vorsprünge (9) in Querrichtung eine Keilform aufweisen und eine geneigte Auflagefläche (36) gegenüber einer anderen, auf dem besagten ersten Teil (3) ausgebildeten geneigten Auflagefläche (34) bieten, so daß örtlich eine trapezförmige Auskehlung für die Aufnahme der inneren Scheibe (5) gebildet wird.

8. Vorrichtung nach einem der Ansprüche 1 bis 7, **dadurch gekennzeichnet**, daß sie zu einer Überbrückungskupplung (10) gehört, die zwischen dem Gehäuse (12) und dem Turbinenrad (14) eines hydrodynamischen Momentwandlers (11) wirksam wird.

9. Vorrichtung nach Anspruch 8, **dadurch gekennzeichnet**, daß der erste koaxiale Teil (3) der Drehschwingungsdämpfervorrichtung eine Masse (3) ist, die drehbar auf einer fest mit dem Gehäuse (12) verbundenen rohrförmigen Nase (17) gelagert ist, wobei das besagte Gehäuse den zweiten koaxialen Teil (12) der Drehschwingungsdämpfervorrichtung bildet.

10. Vorrichtung nach Anspruch 9, **dadurch gekennzeichnet,** daß die Masse (3) an ihrem äußeren Umfang einen quer ausgerichteten ringförmigen Vorsprung (31 aufweist, der eine Kontaktfläche (32) für einen Kolben (2) bietet, den die Überbrückungskupplung aufweist.

## Claims

1. Torsion damping device, notably for motor vehicles, of the type having two coaxial parts (12, 3) mounted so as to be able to move angularly with respect to each other, counter to circumferentially acting elastic means (7) comprising elastic members (71, 72, 73) acting between circumferentially offset radial lugs (55, 65) belonging to two phasing washers (5, 6), mounted so as to rotate with respect to the two coaxial parts (12, 3), characterised in that the two phasing washers (5, 6) are mounted in the same plane, in opposite orientations and concentrically, one of the washers (6), referred to as the outer washer, surrounding the other washer (5) referred to as the inner washer, in that the lugs (55) on the inner washer (5) are directed in the opposite direction to the axis of the assembly, whilst the lugs (65) on the outer washer are directed towards the axis of the assembly, and in that the inner washer (5) is mounted so as to be journalled on a first (3) of the said coaxial parts (3, 12) of the torsion damping device, whilst the outer washer (6) is mounted so as to be journalled on the said first or the said second of the coaxial parts (3, 12) of the torsion damping device.

2. Device according to Claim 1, characterised in that the outer phasing washer (6) is mounted so as to be journalled on the lugs (55) of the inner washer (5).

3. Device according to Claim 1, characterised in that the inner washer (5) is mounted so as to be journalled on the first (3) of the coaxial parts of the torsion damping device, whilst the outer washer (6) is mounted so as to be journalled on the lugs (95) belonging to the second coaxial part (12) of the torsion damping device.

4. Device according to any one of Claims 1 to 3, characterised in that the second (12) of the coaxial parts of the torsion damping device has lugs (95) for supporting the relevant elastic members (73) of the torsion damping device, whilst the first coaxial part (3) of the torsion damping device has fingers (85), and in that the lugs (95) on the second coaxial part (12) are scalloped for the said fingers (35) to pass.

5. Device according to Claim 4, characterised in that the relevant elastic members bear on the lugs (95) on the second (12) of the coaxial parts of the torsion damping device by means of support cups (95) having a curved part in which the said finger (85) is able to enter.

6. Device according to any one of Claims 1 to 5, characterised in that the said first coaxial part (3) has radial projections (9) from place to place, whilst the inner washer (5) has locally passages (51) in which the projections (9) are able to enter, so that the mounting of the inner washer (5) on the first coaxial part (3) of the torsion damping device is of the bayonet type.

7. Device according to Claim 6, characterised in that the projections (9) have transversely a wedge shape and offer an inclined bearing face (36) opposite another inclined face (34) formed on the said first part (3), so that there is formed locally a trapezoidal shaped groove for housing the inner washer (5).

8. Device according to any one of Claims 1 to 7, characterised in that it forms part of a locking clutch (10) acting between the casing (12) and the turbine wheel (14) of a hydrokinetic coupling appliance (11).

9. Device according to Claim 8, characterised in that the first coaxial part (3) of the torsion damping device is a mass (3) mounted so as to be journalled on a tubular nose (17) fixed to the casing (12), the said casing constituting the second coaxial part (12) of the torsion damping device.

10. Device according to Claim 9, characterised in that the mass (3) has at its external periphery a transversely oriented annular projection (31) offering a contact surface (32) to a piston (2), which the locking clutch has.
